Europäisches Patentamt

European Patent Office

Office européen des brevets

(11) Publication number: **0 118 164**
A1

# EUROPEAN PATENT APPLICATION

(21) Application number: **84300114.0**

(22) Date of filing: **09.01.84**

(51) Int. Cl.³: **H 01 B 3/44**
B 29 C 25/00, H 01 B 3/46

(30) Priority: **10.01.83 GB 8300523**

(43) Date of publication of application:
**12.09.84 Bulletin 84/37**

(84) Designated Contracting States:
**AT BE CH DE FR IT LI LU NL SE**

(71) Applicant: **BICC Public Limited Company**
**21, Bloomsbury Street**
**London, WC1B 3QN(GB)**

(72) Inventor: **Banks, Victor Alfred Arthur**
**12 Shildon Close Heatherside**
**Camberley Surrey, GU15 1BL(GB)**

(72) Inventor: **Pinching, Albert Arthur**
**11 Braemar Avenue Wood Green**
**London N22 4BY(GB)**

(74) Representative: **Poole, Michael John et al,**
**BICC plc Patents Department 38 Ariel Way Wood Lane**
**London W12 7DX(GB)**

(54) Dimensionally heat-recoverable articles.

(57) Polymer compositions used in the manufacture of heat-shrink products for high-voltage electrical applications and which can be white or coloured comprise
  (i) a polymeric base comprising at least one polymer having a main chain comprising carbon atoms and optionally oxygen and/or nitrogen atoms but no other hetero-atoms crosslinked to a condition in which it is dimensionally heat-recoverable and has a recovery temperature not less than 80°C and, per hundred parts of the base (by weight);
  (ii) 40 to 120 parts of mineral filler of which
    (a) at least half, subject to a minimum of 30 parts, is calcium carbonate with a number average particle size in the range 0.01 to 50 micro metre and containing substantially no particles with a dimension in excess of 100 micrometre;
    (b) up to 20 parts may be an inert mineral filler, and;
    (c) the balance, if any, is an active flame-retardant filler.
  They may include also one or more pigment; one or more antioxidant and/or ultra-violet stabiliser; one or more acid acceptor; and one or more processing aid.

EP 0 118 164 A1

Croydon Printing Company Ltd

TITLE MODIFIED — see front page    MJP/8300523
0118164

## ARTICLES MADE FROM POLYMER COMPOSITIONS

This invention relates to articles made from polymer compositions, more specifically dimensionally heat-recoverable (especially heat-shrinkable) articles.

More especially, but not exclusively, it is directed to heat-shrinkable sleeving and heat-shrinkable moulded products for use in electrical apparatus in which after shrinking they will be subjected to an electrical stress along their surfaces of at least $10^4$ V/m.

The use of polymer-based materials for such heat-shrink products, especially out of doors, is severely inhibited by the liability of many such materials to failure by "tracking" (the formation of conductive paths by carbonisation of the organic constituent(s) of the material), rapid erosion, or flame; the most popular flexible materials currently commercially available are expensive materials based on the use of alumina trihydrate filler either in very large amounts or in combination with iron (III) oxide (which presumably catalyses some reaction that competes with carbonisation). Large amounts of filler limit physical properties that can be achieved, whereas iron (III) oxide imparts an undesirable intrinsic colour, which makes colour coding of the kind conventional in the electrical industry difficult or impossible.

In accordance with the present invention, a dimensionally heat-recoverable article is made from a polymer composition comprising

(i) a polymeric base comprising at least one polymer having a main chain comprising carbon atoms and optionally oxygen and/or nitrogen atoms but no other hetero-atoms crosslinked to a condition in which it is dimensionally heat recoverable and has a recovery temperature not less than 80°C and, per hundred parts of the base (by weight);

(ii) 40 to 120 parts of mineral filler of which

(a) at least half, subject to a minimum of 30 parts, is calcium carbonate with a number average particle size in the range 0.01 to 50 micrometre and containing substantially no particles with a dimension in excess of 100 micrometre;

(b) up to 20 parts may be an inert mineral filler, and;

(c) the balance, if any, is an active flame-retardant filler;

and optionally effective amounts of

(iii) (a) one or more pigment;

(b) one or more antioxidant and/or ultra-violet stabiliser;

(c) one or more acid acceptor; and

(d) one or more processing aid.

Surprisingly such polymer compositions can achieve a tracking resistance, as determined by the method of ASTM specification D-2303, in excess of 3.0 kV.

The polymer base may be of any polymer (or polymer mixture) free of main-chain hetero-atoms other than oxygen and/or nitrogen that is capable of having the dimensional heat recoverable properties defined, sufficiently inert and capable of accepting the specified loading of calcium carbonate. Among polymers that have been recommended for dimensionally heat recoverable products that are believed suitable are:

(a) polyethylene and semi-crystalline or elastomeric copolymers of ethylene with other hydrocarbons, such as with propene, butene, or propene and a diene;

(b) semi-crystalline or amorphous copolymers of ethylene with one or more unsaturated ester or acid, especially with the lower acrylates (methyl acrylate, ethyl acrylate, butyl acrylate, methyl methacrylate) or with vinyl acetate but including also copolymers with methyl methacrylate, ethyl methacrylate, esters of maleic, itaconic or fumaric acid, or vinyl propionate;

(c) ionomeric resins, such as are obtained by partial neutralisation of carboxylic acid copolymers included in Group (b);

(d) polyethylene oxide;

(e) natural rubber, butyl rubber, synthetic polyisoprenes, nitrile rubbers;

(f) crosslinkable polyesters such as dodecamethylene polypyromellitimide and the Hytrel (trade mark) series of elastomeric polyesters;

(g) alkene-alkadiene block copolymers, especially styrene-butadiene-styrene and styrene-isoprene-styrene block copolymers;

(h) polyvinylidene difluoride; chlorinated polyethylene; and

(j) homopolymers of butyl acrylate and its copolymers with ethyl acrylate or glycidyl methacrylate.

Except when the base polymer is capable of being and has been crosslinked by radiation, residues of a chemical crosslinking agent will normally be present, and crosslinking promoters or their residues may be present in all cases.

Preferred are hydrocarbon-chain polymers with side-chain hetero-atoms to enhance compatibility and loading capacity, and the most preferred side-chains are esters and other carboxylic groups. Typical preferred polymers are the semi-crystalline copolymers of ethylene with vinyl acetate, ethyl acrylate, methyl acrylate, butyl acrylate or acrylic acid.

Commercially available filler grades of calcium carbonate, which generally have a mean particle size in the range 0.01 - 50 micrometre, can be used, and comparable results are obtained with natural and synthetic (precipitated) types; however, particle sizes in the range 0.01 - 10 micrometre are preferred.

The calcium carbonate particles may be coated with a dispersing agent, such as calcium stearate or with a coupling agent, such as a silane or titanate, or an organic material polymerised in situ on the particles.

Suitable active flame-retardant fillers include the usual filler grades of alumina trihydrate, magnesium hydroxide, magnesium carbonate, and dolomite.

Suitable inert (non-flame retardant) mineral fillers include silica flour, clay and talc.

Radiation crosslinking is preferred in all cases; chemical crosslinking may be feasible in some cases. For most of the polymers listed, the organic peroxides readily available and widely-used for the purpose are the most appropriate crosslinking agents; 'Sioplas' crosslinking though the grafting of hydrolysable silane side-chains to the polymer base is possible for some polymer bases, but is likely to be difficult because calcium carbonate is somewhat hygroscopic and at high loadings may carry enough water to risk premature crosslinking.

Preferred crosslinking promoters, for use in radiation crosslinking or in conjunction with peroxides, are the polyfunctional unsaturated esters, such as trimethylolpropane trimethacrylate, triallyl cyanurate, triallyl trimellitate and ethylene glycol dimethacrylate.

Most conventional antioxidants, ultra-violet stabilisers, acid acceptors, processing aids and other conventional additives can be used. One suitable acid acceptor is magnesium oxide. Some pigments can also be used but we have found that they need to be chosen with care and in particular that titanium dioxide degrades resistance to tracking and that its use, alone or in admixture with coloured pigments, is not to be recommended.

The dimensionally heat recoverable articles in accordance with the invention may be made wholly of the polymer composition defined, or that composition may form a coating or other surface layer on a body made of conventional dimensionally heat recoverable material. The compositons are in most cases suitable for extrusion and/or injection moulding prior to cròsslinking and deformation to the heat recoverable condition.

Examples 1-16

The formulations of Examples 1-11 set out in the following Table were prepared, extruded into tubing of 25 mm internal diameter and 3.5 mm wall thickness, and crosslinked by electron beam irradiation at 200 KGy (20 Mrad). They were then expanded 150% by pre-heating to 140°C and blowing into a cold cylindrical mould to impart dimensional heat recovery properties. Comparison Examples 12-16 were similarly processed so far as possible: the composition of Example 13 had physical properties so poor that it would not be extruded.

Flat compression moulded specimens of the same composition were similarly irradiated and tested for tracking performance according to ASTM D-2303 with the results indicated:

TABLE

| Example No | 1 | 2 | 3 | 4 | 5 | 6 | 7 | 8 |
|---|---|---|---|---|---|---|---|---|
| **Composition: (parts by weight)** | | | | | | | | |
| Ethylene/vinyl acetate copolymer (28% vinyl acetate) (Evatane 28-05) | 100 | 100 | 100 | – | – | – | – | – |
| Ethylene/ethyl acrylate copolymer (15% ethyl acrylate), DPDM 6182 | – | – | – | 100 | 100 | 100 | 100 | 100 |
| Silicone Rubber | – | – | – | – | – | – | – | – |
| Calcium Carbonate: | | | | | | | | |
| Snowcal 7ML | – | 80 | 100 | 60 | – | 80 | – | 100 |
| Winnofil S | 80 | – | – | – | 60 | – | 80 | – |
| Alumina Trihydrate (Hydral 710) | – | – | – | – | – | – | – | – |
| Dolomite | – | – | – | – | – | – | – | – |
| China Clay | – | – | – | – | – | – | – | – |
| Antioxidant | | | | | | | | |
| Flectol Pastilles | – | – | – | 0.5 | 0.5 | 0.5 | 0.5 | 0.5 |
| Irganox 565 | 0.2 | 0.2 | 0.2 | – | – | – | – | – |
| Lead Phthalate | – | – | – | – | – | – | – | – |
| Stearic Acid | – | – | – | – | – | – | – | – |
| **Properties:** | | | | | | | | |
| Erosion inception voltage (kV) (mean of 2 or 3 measurements) | 3.5 | – | 3.25 | 3.25 | 3.0 | >3.5 | 3.25 | 3.5 |
| Failure voltage (kV) | 4.0 | 4.0 | >4.25 | 6.25 | >6.25 | >5.5 | 6.0 | 4.0 |
| Failure mode | (f) | (t) | | (f) | | | (f) | (f) |

| Example No | 9 | 10 | 11 | 12* | 13* | 14* | 15* | 16* |
|---|---|---|---|---|---|---|---|---|
| Composition: (parts by weight) | | | | | | | | |
| Ethylene/vinyl acetate copolymer (28% vinyl acetate) (Evatane 28-05) | - | - | - | - | - | - | - | - |
| Ethylene/ethyl acrylate copolymer (15% ethyl acrylate), DPDM 6182 | 100 | 100 | 100 | 100 | 100 | 100 | 100 | - |
| Silicone Rubber | - | - | - | - | - | - | - | 100 |
| Calcium Carbonate: | | | | | | | | |
| Snowcal 7ML | 120 | 35 | 80 | 30 | 150 | 35 | 80 | 80 |
| Winnofil S | - | - | - | - | - | - | - | - |
| Alumina Trihydrate (Hydral 710) | - | - | - | - | - | 45 | - | - |
| Dolomite | - | 45 | - | - | - | - | - | - |
| China Clay | - | - | 10 | - | - | - | 30 | - |
| Antioxidant | | | | | | | | |
| Flectol Pastilles | 0.5 | 0.5 | 0.5 | 0.5 | 0.5 | 0.5 | 0.5 | - |
| Irganox 565 | - | - | - | - | - | - | - | - |
| Lead Phthalate | - | - | 2 | - | - | - | 2 | - |
| Stearic Acid | 2.0 | 1.5 | 1.5 | 1.0 | 1.0 | 2.0 | 1.5 | - |
| Properties: | | | | | | | | |
| Erosion inception voltage (kV) (mean of 2 or 3 measurements) | 3.25 | >3.5 | 3.0 | 2.75 | 3.25 | 2.6 | 2.9 | 2.3 |
| Failure voltage (kV) | 4.0 | | 3.25 | | | 3.0 | | 2.3 |
| Failure mode | (t) | | (f) | | | (f) | | (t) |

* for comparison

The calcium carbonates used in the examples are as follows:-

Snowcal 7ML is a superfine whiting grade of natural calcium carbonate with a mean particle size of 2.9 micrometre and a particle distribution (by sieving) as follows:

finer than 25 micrometres - practically 100% finer than 20 micrometres - 99%

finer than 10 micrometres - 95%

finer than  5 micrometres - 75%

finer than  3 micrometres - 53%

Winnofil S is a precipitated calcium carbonate with a nominal particle size of 75 nm, surface coated with calcium stearate to inhibit agglomeration and promote dispersion.

In the Table, (t) denotes ultimate breakdown by tracking and (f) ultimate breakdown by flaming; in other cases the mode of ultimate breakdown has not yet been determined.

Example 17

This was similar to the preceding examples except that the polymer composition used was that sold in the United Kingdom by BXL Plastics Limited under the designation BP D 2979 FR.  This was found by analysis to consist essentially of an ethylene-ethyl acrylate copolymer (100 parts), natural calcium carbonate (80 parts) and polymerised trihydroxyquinoline (small amount). Observation with the scanning electron microscope suggested that the sizes of the particles of calcium carbonate were typically in the range 0.5-2 micrometre. The erosion inception voltage was found to be 3.5 kV and ultimate breakdown occurred by flaming at 6.25 kV.

All the compositions used in the examples are based on extrusion-grade polymers and are useful for heat-shrink tubing applications when crosslinked by irradiation. Similar formulations based on injection-moulding grades of polymer would be preferred for injection moulded dimensionally heat recoverable articles such as crutch covers, break-outs and shedded sleeves for high-voltage cable terminations.

- 11 -

CLAIMS

1.     A dimensionally heat-recoverable article made from a polymer composition comprising

    (i) a polymeric base comprising at least one polymer having a main chain comprising carbon atoms and optionally oxygen and/or nitrogen atoms but no other hetero-atoms crosslinked to a condition in which it is dimensionally heat-recoverable and has a recovery temperature not less than 80°C and, per hundred parts of the base (by weight);

    (ii) 40 to 120 parts of mineral filler of which

        (a) at least half, subject to a minimum of 30 parts, is calcium carbonate with a number average particle size in the range 0.01 to 50 micro metre and containing substantially no particles with a dimension in excess of 100 micrometre;

        (b) up to 20 parts may be an inert mineral filler, and;

        (c) the balance, if any, is an active flame-retardant filler;

and optionally effective amounts of

    (iii) (a) one or more pigment;

        (b) one or more antioxidant and/or ultra-violet stabiliser;

        (c) one or more acid acceptor; and

        (d) one or more processing aid.

2.    An article as claimed in Claim 1 in which the polymer is selected from the group consisting of

(a) polyethylene and semi-crystalline or elastomeric copolymers of ethylene with other hydrocarbons, such as with propene, butene, or propene and a diene;

(b) semi-crystalline or amorphous copolymers of ethylene with one or more unsaturated ester or acid, especially with the lower acrylates (methyl acrylate, ethyl acrylate, butyl acrylate, methyl methacrylate) or with vinyl acetate but including also copolymers with methyl methacrylate, ethyl methacrylate, esters of maleic, itaconic or fumaric acid, or vinyl propionate;

(c) ionomeric resins, such as are obtained by partial neutralisation of carboxylic acid copolymers included in Group (b);

(d) polyethylene oxide;

(e) natural rubber, butyl rubber, synthetic polyisoprenes, nitrile rubbers;

(f) crosslinkable polyesters such as dodecamethylene polypyromellitimide and the Hytrel (trade mark) series of elastomeric polyesters;

(g) alkene-alkadiene block copolymers, especially styrene-butadiene-styrene and styrene-isoprene-styrene block copolymers;

(h) polyvinylidene difluoride; chlorinated polyethylene; and

(j) homopolymers of butyl acrylate and its copolymers with ethyl acrylate or glycidyl methacrylate.

3. An article as claimed in Claim 1 in which the polymer base is selected from hydrocarbon chain polymers with side-chain hetero-atoms.

4. An article as claimed in Claim 1 in which the polymer base is selected from the semi-crystalline copolymers of ethylene with vinyl acetate, ethyl acrylate, methyl acrylate, butyl acrylate, acrylic acid and maleic acid.

5. An article as claimed in any one of the preceding claims in which the number average particle size of the calcium carbonate is in the range 0.01 to 10 micro metres.

6. An article as claimed in any one of the preceding claims including an active flame retardant filler selected from alumina trihydrate, magnesium hydroxide, magnesium carbonate, and dolomite.

European Patent
Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-3 038 526  (KABEL- UND METALLWERKE GUTEHOFFNUNGSHÜTTE) * Pages 1,2; page 8, example 2 * | 1,2,4 | H 01 B    3/44 B 29 C   25/00 H 01 B    3/46 |
| | --- | | |
| X | FR-A-2 432 535  (RAYCHEM LTD.) * Page 17, example 1; page 22, example 7; page 23, example 23; claims * | 1-6 | |
| | ----- | | |

TECHNICAL FIELDS
SEARCHED (Int. Cl. 3)

H 01 B    3/00
B 29 C   25/00

The present search report has been drawn up for all claims

| Place of search | Date of completion of the search | Examiner |
|---|---|---|
| THE HAGUE | 16-04-1984 | STIENON P.M.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82